# EUROPEAN PATENT APPLICATION

(11) **EP 1 669 701 A2**
(43) Date of publication of application: **14.06.2006**
(21) Application number: 05256318.6
(22) Date of filing: 11.10.2005
(51) Int. Cl.: F25B 27/02, F25B 25/02

(54) **Cogeneration system**

(30) Priority: 10.12.2004 KR 2004104362
(71) Applicant: LG Electronics, Inc., Seoul 150-010 (KR)
(72) Inventor: Choe, Yeong Seop, Buchun-si Kyunggi-do 422-751 (KR); Cho, Eun Jun, Buchun-si, Kyunggi-do 420-030 (KR); Lee, Jae Won, No. 110-501 Kaebong, Seoul 152-092 (KR); Hwang, Yoon Jei, Seoul 135-906 (KR); Ryu, Yun Ho, Seoul 135-906 (KR)
(74) Representative: Camp, Ronald

(57) **Abstract**

A cogeneration system is disclosed in which waste heat generated from a drive source such as an engine is used in at least one of a compression type air conditioner and an absorption type air conditioner, thereby being capable of achieving an enhancement in cooling/heat capacity. The cogeneration system includes a generator (2), a drive source, a compression type air conditioner (10), an absorption type air conditioner (20), and a waste heat recoverer adapted to recover the waste heat of the drive source, and to supply the recovered waste heat to at least one of the compression type air conditioner (10) and the absorption type air conditioner (20). The absorption type air conditioner (20) can use waste heat during a cooling operation thereof, so that it is possible to enhance the efficiency of using waste heat.

## Description

The present invention relates to a cogeneration system. In particular it relates to a cogeneration system in which waste heat of a drive source such as an engine is used in at least one of a compression type air conditioner and an absorption type air conditioner, thereby being capable of achieving an enhancement in system efficiency.

In general, cogeneration systems are adapted to generate both electricity and heat from a single energy source.

Such a cogeneration system can recover heat of exhaust gas or waste heat of cooling water generated from an engine or turbine during an electricity generation operation, so that the cogeneration system can achieve an increase in energy efficiency of 70 to 80% over other systems. By virtue of such an advantage, the cogeneration system has recently been highlighted as an electricity and heat supply source for buildings. In particular, the cogeneration system exhibits highly-efficient energy utilization in that the recovered waste heat is mainly used to heat/cool a confined space and to heat water.

In general, such a cogeneration system include an engine, a generator to generate electricity, using a rotating force outputted from the engine, a heat pump type air conditioner, which is operated with the electricity generated from the generator, and is switched between cooling and heating modes, a thermal storage tank to heat water for supply of hot water, and a heat supply line to supply heat of exhaust gas discharged from the engine and heat of cooling water used to cool the engine.

The heat pump type air conditioner includes a compressor, a 4-way valve, an indoor heat exchanger, an expansion device, and an outdoor heat exchanger, which are connected in series by a refrigerant conduit.

Hereinafter, operation of a conventional cogeneration system, which has the above-mentioned configuration, will be described.

When the engine drives, a rotor of the generator is rotated by an output shaft of the engine, so that the generator generates electricity. The generated electricity is used to operate various electronic appliances including the heat pump type air conditioner and home illumination devices.

Meanwhile, waste heat generated from the engine is supplied to the thermal storage tank via the heat supply line so that the supplied waste heat is used as a heat source to heat water for supply of hot water.

When the heat pump type air conditioner operates in heating mode, the compressor is driven to compress a refrigerant. The 4-way valve establishes a flow path to allow the compressed refrigerant to be circulated through the indoor heat exchanger, expansion device, outdoor heat exchanger, and compressor, in this order. The indoor heat exchanger functions as a condenser to heat indoor air.

On the other hand, when the heat pump type air conditioner operates in cooling mode, the compressor is driven to compress a refrigerant. The 4-way valve establishes a flow path to allow the compressed refrigerant to be circulated through the outdoor heat exchanger, expansion device, indoor heat exchanger, and compressor, in this order. The indoor heat exchanger functions as an evaporator to cool indoor air.

However, the above-mentioned conventional cogeneration system has a problem of low system efficiency because the waste heat of the engine is used only to heat water for supply of hot water.

The present invention seeks to provide an improved cogeneration system. A first aspect of the invention provides a cogeneration system in which waste heat of an engine included in the cogeneration system is used during both heating and cooling operations of a heat pump type air conditioner included in the cogeneration system, and thus, to achieve an enhancement in system efficiency.

A second aspect of the invention provides a cogeneration system comprising: a generator; a drive source operating to drive the generator, thereby causing the generator to generate electricity, the drive source generating waste heat during the operation of the drive source; a compression type air conditioner comprising a compressor, a 4-way valve, an indoor heat exchanger, an expansion device, and an outdoor heat exchanger; an absorption type air conditioner comprising a regenerator, an absorber, a 4-way valve, an indoor heat exchanger, an expansion device, and an outdoor heat exchanger; and a waste heat recoverer adapted to recover the waste heat of the drive source, and to supply the recovered waste heat to at least one of the compression type air conditioner and the absorption type air conditioner.

The waste heat recoverer may comprise an exhaust gas heat exchanger adapted to absorb heat from exhaust gas discharged from the drive source, a cooling water heat exchanger adapted to absorb heat from cooling water used to cool the drive source, and a heat transfer unit to transfer heat from at least one of the exhaust gas heat exchanger and cooling water heat exchanger to the compression type air conditioner or to the absorption type air conditioner.

The heat transfer unit may comprise a heat medium circulation conduit adapted to guide a heat medium, which has been heated by at least one of the exhaust gas heat exchanger and the cooling water heat exchanger, into the regenerator, thereby causing the heat medium to transfer heat to the regenerator, and a heat medium circulation pump adapted to pump the heat medium for circulation of the heat medium.

The cogeneration system may further comprise a cooling heat exchanger adapted to cool the heat medium, which has been heated by at least one of the exhaust gas heat exchanger and the cooling water heat exchanger, when the absorption type air conditioner is in an OFF state, and a cooling heat exchanger circulation conduit connected to the heat medium circulation conduit to guide the heat medium to be circulated through the cooling heat exchanger.

The cogeneration system may further comprise a valve unit adapted to control the heat medium circulation conduit and the cooling heat exchanger circulation conduit such that the heat medium is circulated through the cooling heat exchanger circulation conduit when the absorption type air conditioner is in the OFF state, and is circulated through the heat medium circulation conduit when the absorption type air conditioner is in an ON state.

The heat medium circulation conduit may guide the heat medium, which has been heated by the cooling water heat exchanger, such that the heat medium is re-heated in the exhaust gas heat exchanger, and is then returned to the cooling water heat exchanger after transferring heat to the regenerator.

A further aspect of the invention provides a cogeneration system comprising: a generator; a drive source operating to drive the generator, thereby causing the generator to generate electricity, the drive source generating waste heat during the operation of the drive source; a compression type air conditioner comprising a compressor, a 4-way valve, an indoor heat exchanger, an expansion device, and an outdoor heat exchanger; an absorption type air conditioner comprising a regenerator, an absorber, a 4-way valve, an indoor heat exchanger, an expansion device, and an outdoor heat exchanger; a waste heat recoverer adapted to recover the waste heat of the drive source, and to supply the recovered waste heat to at least one of the compression type air conditioner and the absorption type air conditioner; and a suction-side overheating heat exchanger adapted to supply the waste heat recovered by the waste heat recoverer to the compression type air conditioner.

The waste heat recoverer may comprise an exhaust gas heat exchanger adapted to absorb heat from exhaust gas discharged from the drive source, a cooling water heat exchanger adapted to absorb heat from cooling water used to cool the drive source, and a heat transfer unit to transfer heat from at least one of the exhaust gas heat exchanger and cooling water heat exchanger to the compression type air conditioner or to the absorption type air conditioner.

The heat transfer unit may comprise a first heat medium circulation conduit adapted to guide a heat medium, which has been heated by one of the exhaust gas heat exchanger and the cooling water heat exchanger, into the regenerator, thereby causing the heat medium to transfer heat to the regenerator, and a second heat medium circulation conduit adapted to guide a heat medium, which has been heated by the other one of the exhaust gas heat exchanger and the cooling water heat exchanger, into the suction-side overheating heat exchanger, thereby causing the heat medium to transfer heat to the suction-side overheating heat exchanger.

The first heat medium circulation conduit may guide the heat medium, which has been heated by the exhaust gas heat exchanger, such that the heat medium is returned to the exhaust gas heat exchanger after transferring heat to the regenerator. The second heat medium circulation conduit may guide the heat medium, which has been heated by the cooling water heat exchanger, such that the heat medium is returned to the cooling water heat exchanger after transferring heat to the suction-side overheating heat exchanger.

The cogeneration system may further comprise a cooling heat exchanger adapted to cool the heat medium, which has been heated by at least one of the exhaust gas heat exchanger and the cooling water heat exchanger, when the absorption type air conditioner is in an OFF state or when the compression type air conditioner operates in a cooling mode, a first cooling heat exchanger circulation conduit connected between the cooling heat exchanger and the first heat medium circulation conduit, and a second cooling heat exchanger circulation conduit connected between the cooling heat exchanger and the second heat medium circulation conduit.

The cogeneration system may further comprise a first valve unit adapted to guide the heat medium such that the heat medium is circulated through the second cooling heat exchanger circulation conduit during a cooling operation of the compression type air conditioner, and is circulated through the second heat medium circulation conduit during a heating operation of the compression type air conditioner.

The cogeneration system may further comprise a refrigerant circulation conduit adapted to guide a refrigerant to be sucked into the compressor, a bypass conduit adapted to bypass the refrigerant, which is sucked toward the compressor, through the suction-side overheating heat exchanger during the heating operation of the compression type air conditioner, and a second valve unit adapted to guide the refrigerant, which is sucked toward the compressor, to pass through a selected one of the refrigerant circulation conduit and the bypass conduit.

The heat transfer unit may comprise a first heat medium circulation conduit adapted to guide the heat medium, which has been heated by the cooling water heat exchanger, such that the heat medium is re-heated by the exhaust gas heat exchanger, and is then returned to the cooling water heat exchanger after transferring heat to the regenerator, and a second heat medium circulation conduit connected to the first heat medium circulation conduit to guide the heat medium, which emerges from the regenerator, to be bypassed through the suction-side overheating heat exchanger during a heating operation of the compression type air conditioner.

The cogeneration system may further comprise a first valve unit adapted to control the first heat medium circulation conduit and the second heat medium circulation conduit such that the heat medium is circulated through the first heat medium circulation conduit when the absorption type air conditioner is in an ON state, and the compression type air conditioner operates in a cooling mode, and the heat medium, which emerges from the regenerator, is circulated through the suction-side overheating heat exchanger via the second heat medium circulation conduit during the heating operation of the compression type air conditioner.

The cogeneration system may further comprise a third heat medium circulation conduit connected to the first heat medium circulation conduit to guide the heat medium such that the heat medium bypasses the regenerator 11 when the absorption type air conditioner is in an OFF state.

The cogeneration system may further comprise a second valve unit adapted to control the first heat medium circulation conduit and the third heat medium circulation conduit such that the heat medium passes through the third heat medium circulation conduit when the absorption type air conditioner is in the OFF state, and passes through the first heat medium circulation conduit when the absorption type air conditioner is in the ON state.

The cogeneration system may further comprise a cooling heat exchanger adapted to cool the heat medium during the cooling operation of the compression type air conditioner, and a cooling heat exchanger circulation conduit connected to the second heat medium circulation conduit to guide the heat medium to be circulated through the cooling heat exchanger.

The cogeneration system may further comprise a third valve unit adapted to control the second heat medium circulation conduit and the cooling heat exchanger circulation conduit such that the heat medium is circulated through the cooling heat exchanger circulation conduit during the cooling operation of the compression type air conditioner in the OFF state of the absorption type air conditioner, and is circulated through the second heat medium circulation conduit during the heating operation of the compression type air conditioner.

The cogeneration system may further comprise a refrigerant circulation conduit adapted to guide a refrigerant to be sucked into the compressor, a bypass conduit adapted to bypass the refrigerant, which is sucked toward the compressor, through the suction-side overheating heat exchanger during the heating operation of the compression type air conditioner, and a fourth valve unit adapted to guide the refrigerant, which is sucked toward the compressor, to pass through a selected one of the refrigerant circulation conduit and the bypass conduit.

Embodiments of the invention will now be described by way of non-limiting example only with reference to the drawings, in which:
FIG. 1 is a schematic diagram of a cogeneration system according to a first embodiment of the present invention, illustrating the condition in which an absorption type air conditioner included in the cogeneration system is in an ON state;
FIG. 2 is a schematic diagram of the cogeneration system according to the first embodiment of the present invention, illustrating the condition in which the absorption type air conditioner is OFF state;
FIG. 3 is a schematic diagram of a cogeneration system according to a second embodiment of the present invention, illustrating the condition in which both an absorption type air conditioner and a compression type air conditioner included in the cogeneration system operate in heating mode;
FIG. 4 is a schematic diagram of the cogeneration system according to the second embodiment of the present invention, illustrating the condition in which the absorption type air conditioner is in an OFF state, and the compression type air conditioner operates in heating mode;
FIG. 5 is a schematic diagram of the cogeneration system according to the second embodiment of the present invention, illustrating the condition in which the absorption type air conditioner operates in heating mode, and the compression type air conditioner is in an OFF state;
FIG. 6 is a schematic diagram of the cogeneration system according to the second embodiment of the present invention, illustrating the condition in which both the absorption type air conditioner and the compression type air conditioner are in cooling mode;
FIG. 7 is a schematic diagram of a cogeneration system according to a third embodiment of the present invention, illustrating the condition in which both an absorption type air conditioner and a compression type air conditioner included in the cogeneration system operate in heating mode;
FIG. 8 is a schematic diagram of the cogeneration system according to the third embodiment of the present invention, illustrating the condition in which the absorption type air conditioner is in an OFF state, and the compression type air conditioner operates in heating mode;
FIG. 9 is a schematic diagram of the cogeneration system according to the third embodiment of the present invention, illustrating the condition in which the absorption type air conditioner operates in heating mode, and the compression type air conditioner is in an OFF state;
FIG. 10 is a schematic diagram of the cogeneration system according to the third embodiment of the present invention, illustrating the condition in which both the absorption type air conditioner and the compression type air conditioner are in cooling mode; and
FIG. 11 is a schematic diagram of the cogeneration system according to the third embodiment of the present invention, illustrating the condition in which the absorption type air conditioner is in an OFF state, and the compression type air conditioner operates in cooling mode.

Hereinafter, exemplary embodiments of a cogeneration system according to the present invention will be described with reference to the annexed drawings. In the following description, identical elements are referred to by the same title and designated by the same reference numeral, without any redundant description thereof.

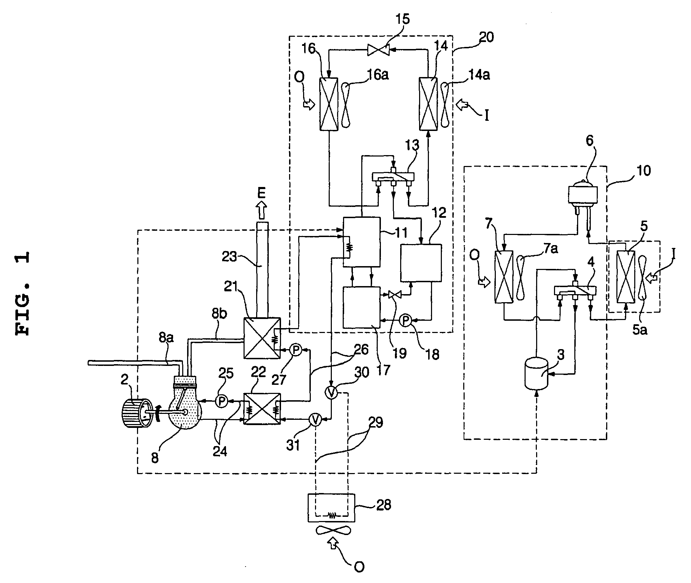

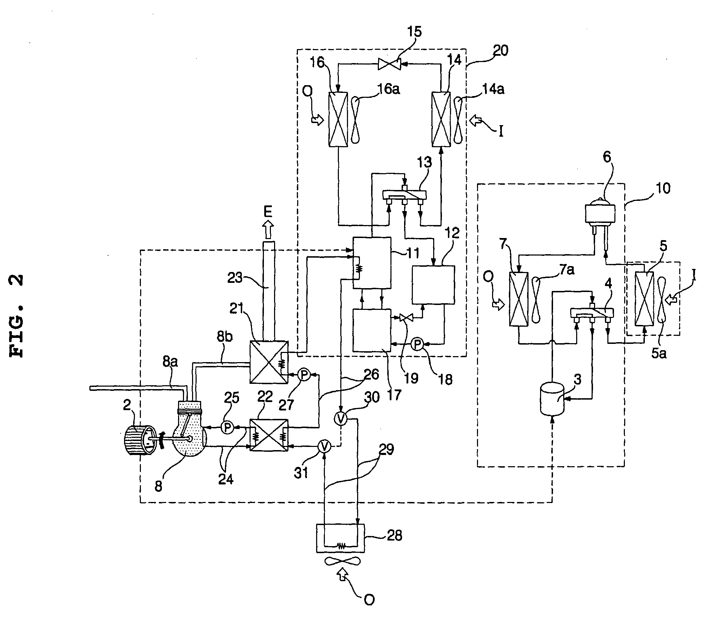

As shown in FIGS. 1 and 2, the cogeneration system according to the first embodiment of the present invention includes a generator 2, and a drive source, which operates to drive the generator 2 for generation of electricity, and generates waste heat during operation thereof. The cogeneration system also includes a compression type air conditioner 10, which includes a compressor 3, a first 4-way valve 4, a first indoor heat exchanger 5, a first expansion device 6, and a first outdoor heat exchanger 7, and an absorption type air conditioner 20, which includes a regenerator 11, an absorber 12, a second 4-way valve 13, a second indoor heat exchanger 14, a second expansion device 15, and a second outdoor heat exchanger 16. The cogeneration system further includes a waste heat recoverer adapted to recover the waste heat of the drive source, and to supply the recovered waste heat to at least one of the compression type air conditioner 10 and absorption type air conditioner 20.

The generator 2 may be an AC generator or a DC generator. The generator 2 includes a rotor coupled to an output shaft of the drive source so that the generator 2 generates electricity during rotation of the output shaft. The drive source comprises an engine 8, a fuel cell, or the like. The following description will be given only in conjunction with the case in which the drive source comprises the engine 8.

The engine 8 includes a combustion chamber defined in the interior of the engine 8. A fuel tube 8a and an exhaust tube 8b are connected to the engine 8. The fuel tube 8a is adapted to supply fuel such as liquefied gas or liquefied petroleum gas into the combustion chamber. The exhaust tube 8b is adapted to guide exhaust gas discharged from the combustion chamber.

The compression type air conditioner 10 is of a heat pump type. The compression type air conditioner 10 is connected with the generator 2 via a power line, so as to use the electricity generated from the generator 2 for driving of the compressor 3.

A first indoor fan 5a is arranged near the first indoor heat exchanger 5 to force indoor air to pass around the first indoor heat exchanger 5. The first indoor heat exchanger 5 and first indoor fan 5a constitute an indoor unit of the compression type air conditioner 10.

A first outdoor fan 7a is arranged near the first outdoor heat exchanger 7 to force outdoor air to pass around the first outdoor heat exchanger 7. The outdoor fan 7a constitutes an outdoor unit of the compression type air conditioner 10, together with the compressor 3, first 4-way valve 4, first expansion device 6, and first outdoor heat exchanger 7.

Similarly to the compression type air conditioner 10, the absorption type air conditioner 20 is of a heat pump type. The regenerator 11 of the absorption type air conditioner 20 produces refrigerant vapor (pure ammonia vapor) and a dilute solution (an aqueous ammonia solution with a low ammonia concentration) from a concentrated solution (an aqueous ammonia solution with a high ammonia concentration), using heat received from the waste heat recoverer. In addition to the regenerator 11, the absorption type air conditioner 20 includes a condenser adapted to heat-exchange with outdoor air to condense the refrigerant vapor produced by the regenerator 11. The second outdoor heat exchanger 16 functions as the condenser during cooling operation of the absorption type air conditioner 20, whereas the second indoor heat exchanger 14 functions as the condenser during heating operation of the absorption type air conditioner 20. The absorption type air conditioner 20 also includes an evaporator adapted to heat-exchange with outdoor air to change refrigerant liquid into refrigerant vapor. The second indoor heat exchanger 14 functions as the evaporator during cooling operation of the absorption type air conditioner 20, whereas the second outdoor heat exchanger 16 functions as the evaporator during heating operation of the absorption type air conditioner 20. The absorber 12 of the absorption type air conditioner 20 causes the dilute solution produced by the regenerator 11 to absorb the refrigerant vapor discharged from the evaporator, thereby producing a concentrated solution. The absorption type air conditioner 20 further includes a solution heat exchanger 7 adapted to cause the refrigerant vapor produced by the regenerator 11 to heat-exchange with the concentrated solution discharged from the absorber 12, thereby increasing the concentration of the refrigerant vapor.

A second indoor fan 14a is arranged near the second indoor heat exchanger 14 to force indoor air to pass around the second indoor heat exchanger 14. A second outdoor fan 16a is arranged near the second outdoor heat exchanger 16 to force outdoor air to pass around the second outdoor heat exchanger 14.

The second 4-way valve 13, which is also included in the absorption type air conditioner 20, changes the refrigerant flow path when the absorption type air conditioner 20 is switched between cooling and heating modes.

A solution pump 18 and an expansion valve 19 are arranged between the absorber 12 and the solution heat exchanger 17. The solution pump 18 pumps the concentrated solution from the absorber 12 to the solution heat exchanger 17. The expansion valve 19 reduces the pressure of the dilute solution cooled in accordance with heat exchange thereof in the solution heat exchanger 17, and guides the dilute solution to the absorber 12.

Meanwhile, the waste heat recoverer includes an exhaust gas heat exchanger 21 adapted to absorb heat from the exhaust gas discharged from the engine 8, and a cooling water heat exchanger 22 adapted to absorb heat from the cooling water used to cool the engine 8. The waste heat recoverer also includes a heat transfer unit adapted to transfer heat from at least one of the exhaust gas heat exchanger 21 and cooling water heat exchanger 22 to the compression type air conditioner 10 or absorption type air conditioner 20.

In the following description, it is assumed that, in the first embodiment, heat recovered by the waste heat recoverer is transferred only to the absorption type air conditioner 20, and the compression type air conditioner 10 receives only the electricity generated from the generator 2.

The exhaust gas heat exchanger 21 is connected to the engine 8 via the exhaust tube 8b. An exhaust tube 23 is connected to the exhaust gas heat exchanger 21 to guide the exhaust gas passing through the exhaust gas heat exchanger 21 to be discharged to the atmosphere.

The cooling water heat exchanger 22 is connected with the engine 8 via a cooling water circulation conduit 24. Accordingly, cooling water, which is heated while cooling the engine 8, is fed to the cooling water heat exchanger 22 via the cooling water circulation conduit 24, and is then returned to the engine 8 via the cooling water circulation conduit 24 after transferring heat to the cooling water heat exchanger 22. For the circulation of the cooling water, a cooling water circulation pump 25 is arranged at the cooling water circulation conduit 24.

The heat transfer unit includes a heat medium circulation conduit 26 adapted to guide a heat medium, which has been heated by at least one of the exhaust gas heat exchanger 21 and cooling water heat exchanger 22, to the regenerator 11, so as to allow the heat medium to transfer heat to the regenerator 11. The heat transfer unit also includes a heat medium circulation pump 27 adapted to pump the heat medium for circulation of the heat medium.

The following description will be given only in conjunction with the case in which the heat medium circulation conduit 26 guides the heat medium, which has been heated while sequentially passing through the cooling water heat exchanger 22 and exhaust gas heat exchanger 21, to be introduced into the regenerator 11, and then to be returned to the cooling water heat exchanger 22 after transferring heat to the regenerator 11.

Meanwhile, the cogeneration system further includes a cooling heat exchanger 28 adapted to cool the heat medium in an OFF state of the absorption type air conditioner 20. A cooling heat exchanger circulation conduit 29 is connected between the cooling heat exchanger 28 and the heat medium circulation conduit 26, in order to allow the heat medium to be circulated through the cooling heat exchanger 28.

The cogeneration system further includes a valve unit adapted to guide the heat medium to be circulated through the cooling heat exchanger circulation conduit 29 in the OFF state of the absorption type air conditioner 20, and to be circulated through the heat medium circulation conduit 26 in the ON state of the absorption type air conditioner 20.

The valve unit includes a first 3-way valve 30 arranged at a portion of the heat medium circulation conduit 26, to which one end of the cooling heat exchanger circulation conduit 29 is connected, in order to guide the heat medium, which has been heated while sequentially passing through the cooling water heat exchanger 22 and exhaust gas heat exchanger 21, to be introduced into the cooling heat exchanger 28. The valve unit also includes a second 3-way valve 31 arranged at a portion of the heat medium circulation conduit 26, to which the other end of the cooling heat exchanger circulation conduit 29 is connected, in order to guide the heat medium, which has been cooled while passing through the cooling heat exchanger 28, to be introduced into the cooling water heat exchanger 22.

The cogeneration system further includes a controller (not shown) for not only controlling the compression type air conditioner 10 and absorption type air conditioner 20, but also performing control operations to cause the electricity from the generator 2 to be supplied only to the compression type air conditioner 10 when only the compression type air conditioner 10 operates, and to be supplied only to the absorption type air conditioner 20 when only the absorption type air conditioner 20 operates.

Hereinafter, operation of the cogeneration system according to the first embodiment of the present invention will be described.

When fuel is supplied to the engine 8 via the fuel tube 8a, the engine 8 is driven, so that the output shaft of the engine 8 is rotated, thereby causing the generator 2 to generate electricity.

Exhaust gas, which is discharged from the engine 8 during the operation of the engine 8, releases heat to the exhaust gas heat exchanger 21 while passing through the exhaust gas heat exchanger 21, and is then discharged to the atmosphere.

During the operation of the engine 8, the cooling water pump 25 is driven, so that the cooling water, which is heated while cooling the engine 8, is fed to the cooling water heat exchanger 22 via the cooling water circulation conduit 24. After releasing heat to the cooling water heat exchanger 22, the cooling water is returned to the engine 8 via the cooling water circulation conduit 24.

The electricity generated from the generator 2 is used to drive the compressor 3 of the compression type air conditioner 10. The electricity generated from the generator 2 is also supplied to the regenerator 11 of the absorption type air conditioner 20.

Meanwhile, when the absorption type air conditioner 20 is switched on to operate in heating mode, the second 4-way valve 13 is switched to heating mode, as shown in FIG. 1. Also, the first and second 3-way valves 30 and 31 are controlled to operate in an ON mode, and the heat medium circulation pump 27 is driven.

That is, the first and second 3-way valves 30 and 31 close the cooling heat exchanger circulation conduit 29, while opening the heat medium circulation conduit 26. The heat medium circulation pump 27 pumps the heat medium.

The heat medium pumped by the heat medium circulation pump 27 is heated while passing through the cooling water heat exchanger 22, and is then introduced into the exhaust gas heat exchanger 21. The heat medium is again heated by the exhaust gas heat exchanger 21, and is then introduced into the regenerator 11 through the heat medium circulation conduit 26. Accordingly, the heat medium transfers heat to the regenerator 11.

Using the transferred heat, the regenerator 11 produces refrigerant vapor from a concentrated solution contained in the regenerator 11. A dilute solution is also produced which is a portion of the concentrated solution remaining without being changed into the refrigerant vapor.

The refrigerant produced in the regenerator 11 is supplied to the solution heat exchanger 17. The refrigerant is rectified in the solution heat exchanger 17 while heat-exchanging with a concentrated solution supplied from the absorber 12 to the solution heat exchanger 17. The rectified refrigerant is introduced into the absorber 12 after passing through the second 4-way valve 13, second indoor heat exchanger 14, second expansion device 15, second outdoor heat exchanger 16, and second 4-way valve 13, in this order. In this case, the second indoor heat exchanger 14 functions as a condenser to heat indoor air.

On the other hand, when the absorption type air conditioner 20 is switched on to operate in cooling mode, the second 4-way valve 13 is switched to cooling mode. In this case, the flow path of the refrigerant is changed from that of heating mode, but the flow path of the heat medium is not changed from that of heating mode. That is, the principle of producing refrigerant vapor in the regenerator 11 using heat transferred from the heat medium to the regenerator 11 in cooling mode is identical to that of heating mode.

In other words, since the regenerator 11 is configured to produce refrigerant vapor using a heat source, the regenerator 11 always requires heat of the heat medium irrespective of the operating mode (that is, cooling or heating mode) of the absorption type air conditioner 20 as long as the absorption air conditioner 20 is in operation.

On the other hand, when the absorption type air conditioner 20 is switched off, the first and second 3-way valves 30 and 31 are controlled to operate in an OFF mode, thereby opening the cooling heat exchanger circulation conduit 29.

In this case, the heat medium pumped by the heat medium circulation pump 27 sequentially passes through the cooling water heat exchanger 22 and exhaust gas heat exchanger 21, and then enters the cooling heat exchanger 28 via the first 3-way valve 30.

The heat medium entering the cooling heat exchanger 28 releases heat in the cooling heat exchanger 28, and returns the cooling water heat exchanger 22 after passing through the heat medium circulation conduit 26 via the second 3-way valve 31.

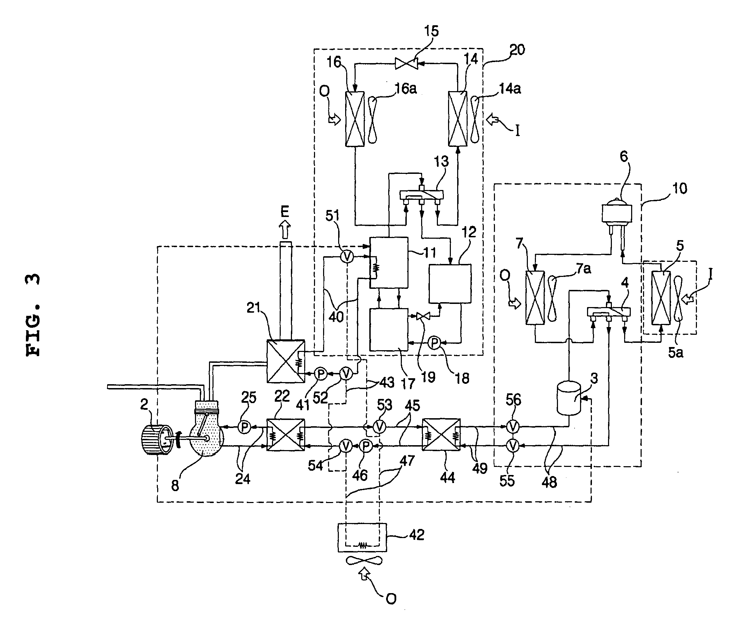

In FIGS. 3 to 6, reference numerals respectively corresponding to those in FIGS. 1 and 2 are designated by the same reference numerals.

As shown in FIGS. 3 to 6, the cogeneration system according to the second embodiment of the present invention includes a generator 2, and a drive source, which operates to drive the generator 2 for generation of electricity, and generates waste heat during operation thereof. The cogeneration system also includes a compression type air conditioner 10, which includes a compressor 3, a first 4-way valve 4, a first indoor heat exchanger 5, a first expansion device 6, and a first outdoor heat exchanger 7, and an absorption type air conditioner 20, which includes a regenerator 11, an absorber 12, a second 4-way valve 13, a second indoor heat exchanger 14, a second expansion device 15, and a second outdoor heat exchanger 16. The cogeneration system further includes a waste heat recoverer adapted to recover the waste heat of the drive source, and to supply the recovered waste heat to at least one of the compression type air conditioner 10 and absorption type air conditioner 20, and a suction-side overheating heat exchanger 44 adapted to heat a refrigerant sucked into the compressor 3 during a heating operation of the compression type air conditioner 10.

The waste heat recoverer includes an exhaust gas heat exchanger 21 adapted to absorb heat from the exhaust gas discharged from the drive source (hereinafter, referred to as an engine 8), and a cooling water heat exchanger 22 adapted to absorb heat from the cooling water used to cool the engine 8. The waste heat recoverer also includes a heat transfer unit adapted to transfer heat from at least one of the exhaust gas heat exchanger 21 and cooling water heat exchanger 22 to the compression type air conditioner 10 or absorption type air conditioner 20.

The heat transfer unit includes a first heat medium circulation conduit 40 adapted to guide a heat medium, which has been heated by at least one of the exhaust gas heat exchanger 21 and cooling water heat exchanger 22, to the regenerator 11, so as to allow the heat medium to transfer heat to the regenerator 11. The heat transfer unit also includes a second heat medium circulation conduit 45 adapted to guide the heat medium heated by at least one of the exhaust gas heat exchanger 21 and cooling water heat exchanger 22, to the suction-side overheating heat exchanger 44, so as to allow the heat medium to transfer heat to the suction-side overheating heat exchanger 44.

The heat transfer unit further includes a first heat medium circulation pump 41 arranged at the first heat medium circulation conduit 40 to pump the heat medium, which passes through the first heat medium circulation conduit 40, and a second heat medium circulation pump 46 arranged at the second heat medium circulation conduit 45 to pump the heat medium, which passes through the second heat medium circulation conduit 45.

The cogeneration system of the second embodiment has the same configuration and functions as those of the first embodiment in terms of the generator 2, drive source, compression type air conditioner 10, absorption type air conditioner 20, exhaust gas heat exchanger 21, and cooling water heat exchanger 22, except that the first heat medium circulation conduit 40 guides circulation of only the heat medium heated by the exhaust gas heat exchanger 21. Accordingly, the constituent elements of the second embodiment respectively corresponding to those of the first embodiment are designated by the same reference numerals, and no detailed description thereof will be given.

Meanwhile, the cogeneration system further includes a cooling heat exchanger 42 adapted to cool the heat medium heated by the exhaust gas heat exchanger 21 in the OFF state of the absorption type air conditioner 20. A first cooling heat exchanger circulation conduit 43 is connected between the cooling heat exchanger 42 and the first heat medium circulation conduit 40, in order to allow the heat medium heated by the exhaust gas heat exchanger 21 to be circulated through the cooling heat exchanger 42.

The cogeneration system further includes a first valve unit adapted to control open/close of the first cooling heat exchanger circulation conduit 43 and first heat medium circulation conduit 41 such that the heat medium is circulated through the first cooling heat exchanger circulation conduit 43 in the OFF state of the absorption type air conditioner 20, and is circulated through the first heat medium circulation conduit 41 in the ON state of the absorption type air conditioner 20.

The first valve unit includes a first 3-way valve 51 arranged at a portion of the first heat medium circulation conduit 41, to which one end of the cooling heat exchanger circulation conduit 43 is connected, and a second 3-way valve 52 arranged at a portion of the first heat medium circulation conduit 41, to which the other end of the cooling heat exchanger circulation conduit 43 is connected.

The following description will be given only in conjunction with the case in which the first heat medium circulation conduit 40 guides only the heat medium heated by the exhaust gas heat exchanger 21 to be returned to the exhaust gas heat exchanger 21 after transferring heat to the regenerator 11, and the second heat medium circulation conduit 45 guides only the heat medium heated by the cooling water heat exchanger 22 to be returned to the cooling water heat exchanger 22 after transferring heat to the suction-side overheating heat exchanger 44.

A second cooling heat exchanger circulation conduit 47 is connected between the cooling heat exchanger 42 and the second heat medium circulation conduit 45, in order to allow the heat medium heated by the cooling water heat exchanger 22 during the cooling operation of the compression type air conditioner 10 to be circulated through the cooling heat exchanger 42.

The cogeneration system further includes a second valve unit adapted to guide the heat medium to be circulated through the second cooling heat exchanger circulation conduit 47 during the cooling operation of the compression type air conditioner 10, and to be circulated through the second heat medium circulation conduit 45 during the heating operation of the compression type air conditioner 10.

The second valve unit includes a third 3-way valve 53 arranged at a portion of the second heat medium circulation conduit 45, to which one end of the second cooling heat exchanger circulation conduit 47 is connected, in order to guide the heat medium, which has been heated while passing through the cooling water heat exchanger 22, to be circulated through the second cooling heat exchanger circulation conduit 47. The second valve unit also includes a fourth 3-way valve 54 arranged at a portion of the second heat medium circulation conduit 45, to which the other end of the second cooling heat exchanger circulation conduit 47 is connected, in order to guide the heat medium, which has been cooled while passing through the cooling heat exchanger 42, to be circulated through the cooling water heat exchanger 22.

The cogeneration system further includes a refrigerant circulation conduit 48 adapted to guide the refrigerant to be sucked into the compressor 3, a bypass conduit 49 adapted to bypass the refrigerant, which is sucked toward the compressor 3 during the heating operation of the compression type air conditioner 10, through the suction-side overheating heat exchanger 44, and a third valve unit adapted to allow the refrigerant sucked toward the compressor 3 to pass through a selected one of the refrigerant circulation conduit 48 and bypass conduit 49.

The third valve unit includes a fifth 3-way valve 55 arranged at a portion of the refrigerant circulation conduit 48, to which an inlet of the bypass conduit 49 is connected, in order to guide the refrigerant into the bypass conduit 49, and a sixth 3-way valve 56 arranged at a portion of the refrigerant circulation conduit 48, to which an outlet of the bypass conduit 49 is connected, in order to guide the refrigerant emerging from the suction-side overheating heat exchanger 44 to be circulated through the refrigerant circulation conduit 48.

The cogeneration system further includes a controller (not shown) for not only controlling the compression type air conditioner 10 and absorption type air conditioner 20, but also performing control operations to cause the second heat medium circulation pump 54 to be in an ON state during the heating operation of the compression type air conditioner 10, to cause the third and fourth 3-way valves 53 and 54 to operate in heating mode during the heating operation of the compression type air conditioner 10, and to control the first and second 3-way valves 51 and 52 in accordance with the ON or OFF state of the absorption type air conditioner 20.

Hereinafter, operation of the cogeneration system according to the second embodiment of the present invention will be described.

First, when both the compression type air conditioner 10 and the absorption type air conditioner 20 operate in heating mode, as shown in FIG. 3, electricity generated from the generator 2 is supplied to the regenerator 11 and compressor 3. The first and second 4-way valves 4 and 13 operate in heating mode, and the first, second, third, fourth, fifth, and sixth 3-way valves 51, 52, 53, 54, 55, and 56 operate in heating mode. The first and second heat medium circulation pumps 41 and 54 are driven.

The first and second 3-way valves 51 and 52 close the first cooling heat exchanger circulation conduit 43 while opening the first heat medium circulation conduit 40, whereas the third and fourth 3-way valves 53 and 54 close the second cooling heat exchanger circulation conduit 47 while opening the second heat medium circulation conduit 45. The fifth and sixth 3-way valves 55 and 56 open the bypass conduit 49, thereby causing the refrigerant supplied toward the compressor 3 to be introduced into the suction-side overheating heat exchanger 44 via the bypass conduit 49.

The first and second heat medium circulation pumps 41 and 54 pump the heat medium.

The heat medium pumped by the first heat medium circulation pump 41 is heated while passing through the exhaust gas heat exchanger 21, and is then introduced into the regenerator 11 via the first heat medium circulation conduit 40. After transferring heat to the regenerator 11, the heat medium is returned to the exhaust gas heat exchanger 21.

The heat medium pumped by the second heat medium circulation pump 41 is heated while passing through the cooling water heat exchanger 22, and is then introduced into the suction-side overheating heat exchanger 44 via the second heat medium circulation conduit 45. After transferring heat to the suction-side overheating heat exchanger 44, the heat medium is returned to the cooling water heat exchanger 22.

The refrigerant introduced into the suction-side overheating heat exchanger 44 is heated by the heat medium introduced into the suction-side overheating heat exchanger 44 via the second heat medium circulation conduit 45. The heated refrigerant passes through the first 4-way valve 4 and first indoor heat exchanger 5 after being compressed by the compressor 3. Since the refrigerant is re-heated in the suction-side overheating heat exchanger 44, an increased amount of heat is released from the refrigerant. Accordingly, the heating performance of the compression type air conditioner 10 is enhanced.

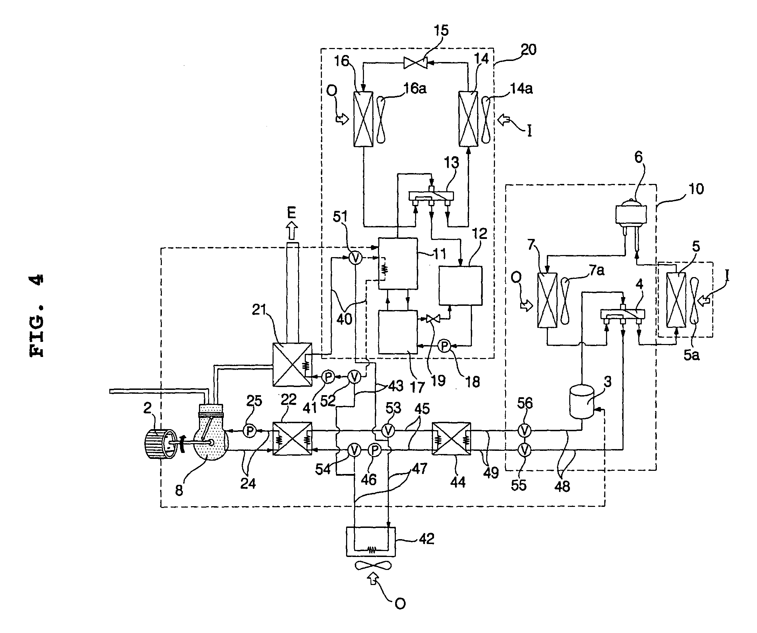

On the other hand, when the compression type air conditioner 10 operates in heating mode in the OFF state of the absorption type air conditioner 20, as shown in FIG. 4, the electricity generated from the generator 2 is supplied only to the compression type air conditioner 10. In this case, the first and second 3-way valves 51 and 52 are controlled to be in OFF mode. On the other hand, the third, fourth, fifth, and sixth 3-way valves 53, 54, 55, and 56 are controlled to be in heating mode.

Accordingly, the first and second 3-way valves 51 and 52 open the first cooling heat exchanger circulation conduit 43, thereby causing the heat medium heated by the exhaust gas heat exchanger 21 to be introduced into the cooling heat exchanger 22 via the first cooling heat exchanger circulation conduit 43 after passing through the first 3-way valve 51. Accordingly, the heat medium releases heat in the cooling heat exchanger 22.

The heat medium is subsequently returned to the exhaust gas heat exchanger 21 via the second 3-way valve 52.

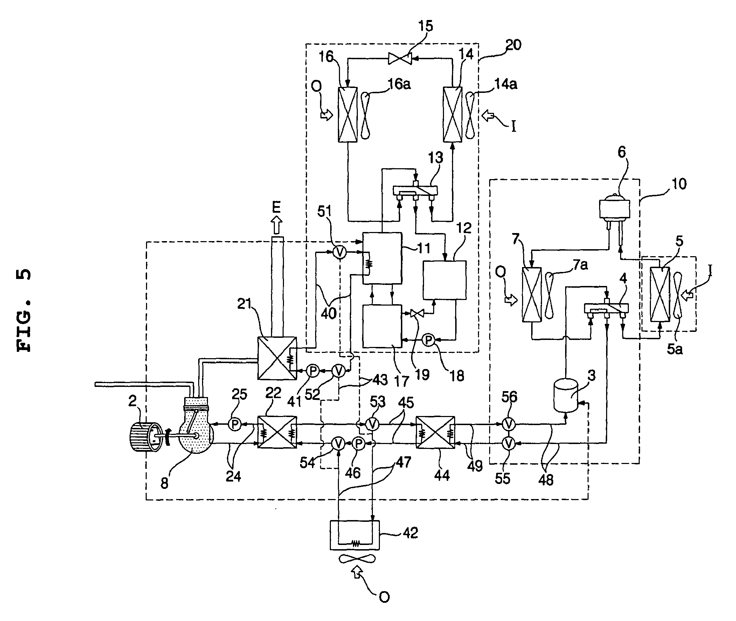

On the other hand, when the absorption type air conditioner 20 is in an ON state, and the compression type air conditioner 10 is in an OFF state, as shown in FIG. 5, the electricity generated from the generator 2 is supplied only to the absorption type air conditioner 20. In this case, the first and second 3-way valves 51 and 52 are controlled to be in ON mode, whereas the third and fourth 3-way valves 53 and 54 are controlled to be in OFF mode.

Accordingly, the first and second 3-way valves 51 and 52 open the first heat medium circulation conduit 40 while closing the first cooling heat exchanger circulation conduit 43, thereby causing the heat medium heated by the exhaust gas heat exchanger 21 to be introduced into the regenerator 11, and then to be returned to the exhaust gas heat exchanger 21.

On the other hand, the third and fourth 3-way valves 53 and 54 open the second cooling heat exchanger circulation conduit 47. Accordingly, the heat medium heated by the cooling water heat exchanger 22 is introduced into the cooling heat exchanger 42 via the second cooling heat exchanger circulation conduit 47. After releasing heat in the cooling heat exchanger 42, the heat medium is returned to the cooling water heat exchanger 22 via the fourth 3-way valve 54.

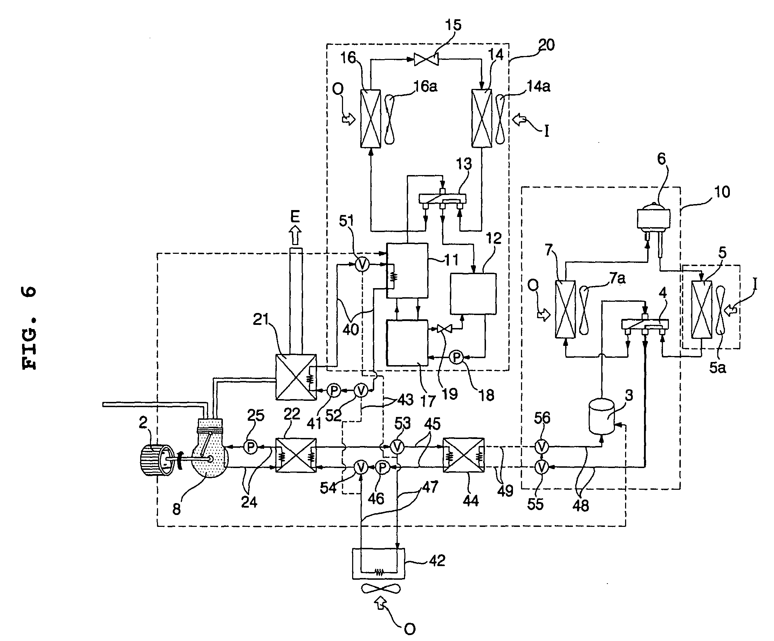

When both the compression type air conditioner 10 and the absorption type air conditioner 20 operate in cooling mode, as shown in FIG. 6, the first and second 4-way valves 4 and 13 operate in cooling mode. In this case, the first and second 3-way valves 51 and 52 are controlled to be in ON mode, the second and fourth 3-way valves 53 and 54 are controlled to be in OFF mode, and the fifth and sixth 3-way valves 55 and 56 are controlled to operate in cooling mode.

In this case, since the absorption type air conditioner 20 requires a heat source supplied from the regenerator 11 irrespective of the operation mode (cooling or heating mode) of the absorption type air conditioner 20, the heat medium emerging from the exhaust gas heat exchanger 21 is guided to be supplied to the regenerator 11, and the heat medium emerging from the cooling water heat exchanger 22 is prevented from being supplied to the suction-side overheating heat exchanger 44.

Accordingly, since the first heat medium circulation conduit 40 is opened by the first and second 3-way valves 51 and 52, the heat medium heated in the exhaust gas heat exchanger 21 is introduced into the regenerator 11 via the first heat medium circulation conduit 40, so that the heat medium transfers heat to the regenerator 11. As a result, refrigerant vapor is produced in the regenerator.

The refrigerant vapor produced in the regenerator 11 passes through the second 4-way valve 13, second outdoor heat exchanger 16, second expansion device 15, and second indoor heat exchanger 14, in this order, thereby cooling indoor air.

Meanwhile, since the second cooling heat exchanger circulation conduit 47 is opened by the third and fourth 3-way valves 53 and 54, the heat medium heated in the cooling water heat exchanger 22 is introduced into the cooling heat exchanger 42 via the second cooling heat exchanger circulation conduit 47. After releasing heat in the cooling heat exchanger 42, the heat medium is returned to the cooling water heat exchanger 22.

Also, since the bypass conduit 49 is closed by the fifth and sixth 3-way valves 55 and 56, the refrigerant is directly sucked into the compressor 3 without passing through the suction-side overheating heat exchanger 44.

The refrigerant sucked into the compressor 3 passes through the first 4-way valve 4, first outdoor heat exchanger 7, first expansion device 6, and first indoor heat exchanger 5, in this order, thereby cooling indoor air.

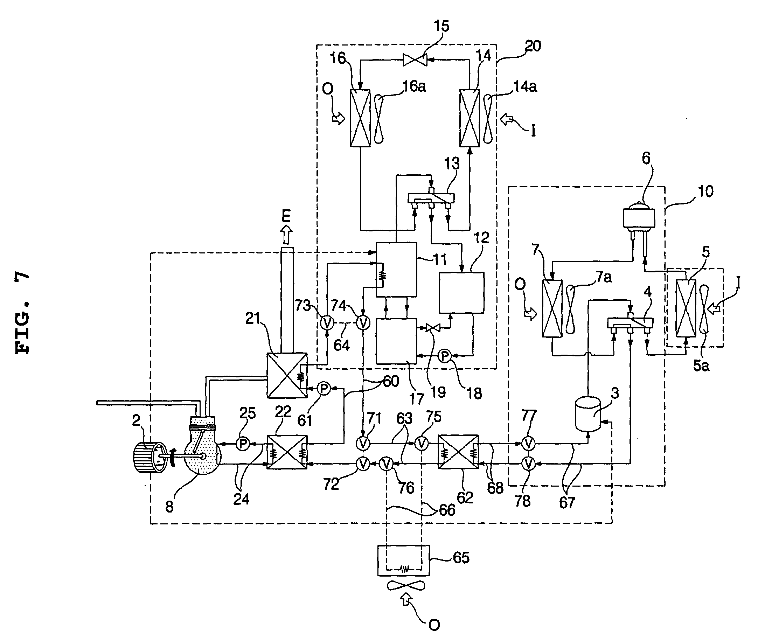

In FIGS. 7 to 11, reference numerals respectively corresponding to those in FIGS. 1 to 6 are designated by the same reference numerals.

As shown in FIGS. 7 to 11, the cogeneration system according to the third embodiment of the present invention includes a generator 2, and a drive source, which operates to drive the generator 2 for generation of electricity, and generates waste heat during operation thereof. The cogeneration system also includes a compression type air conditioner 10, which includes a compressor 3, a first 4-way valve 4, a first indoor heat exchanger 5, a first expansion device 6, and a first outdoor heat exchanger 7, and an absorption type air conditioner 20, which includes a regenerator 11, an absorber 12, a second 4-way valve 13, a second indoor heat exchanger 14, a second expansion device 15, and a second outdoor heat exchanger 16. The cogeneration system further includes a waste heat recoverer adapted to recover the waste heat of the drive source, and to supply the recovered waste heat to at least one of the compression type air conditioner 10 and absorption type air conditioner 20, and a suction-side overheating heat exchanger 62 adapted to heat a refrigerant sucked into the compressor 3 during a heating operation of the compression type air conditioner 10.

The waste heat recoverer includes an exhaust gas heat exchanger 21 adapted to absorb heat from the exhaust gas discharged from the drive source (hereinafter, referred to as an engine 8), and a cooling water heat exchanger 22 adapted to absorb heat from the cooling water used to cool the engine 8. The waste heat recoverer also includes a heat transfer unit adapted to transfer heat from at least one of the exhaust gas heat exchanger 21 and cooling water heat exchanger 22 to the compression type air conditioner 10 or absorption type air conditioner 20.

The heat transfer unit includes a first heat medium circulation conduit 60 adapted to guide a heat medium, which has been heated by at least one of the exhaust gas heat exchanger 21 and cooling water heat exchanger 22, to the regenerator 11, so as to allow the heat medium to transfer heat to the regenerator 11. The heat transfer unit also includes a second heat medium circulation conduit 63 connected to the first heat medium circulation conduit 60 to bypass the refrigerant, which emerges from the regenerator 11 during the heating operation of the compression type air conditioner 10, through the suction-side overheating heat exchanger 62.

The heat transfer unit further includes a heat medium circulation pump 61 arranged at the first heat medium circulation conduit 60 to pump the heat medium for circulation of the heat medium.

The cogeneration system of the third embodiment has the same configuration and functions as those of the first embodiment in terms of the generator 2, engine 8, compression type air conditioner 10, absorption type air conditioner 20, exhaust gas heat exchanger 21, and cooling water heat exchanger 22, except that the first heat medium circulation conduit 60 guides the heat medium heated by the cooling water heat exchanger 22 to be introduced into the exhaust gas heat exchanger 21 for re-heating of the heat medium, and then to be returned to the cooling water heat exchanger 22 after transferring heat to the regenerator 11. Accordingly, the constituent elements of the second embodiment respectively corresponding to those of the first embodiment are designated by the same reference numerals, and no detailed description thereof will be given.

That is, the first heat medium circulation conduit 60 is connected to both the exhaust gas heat exchanger 21 and the cooling water heat exchanger 22.

The cogeneration system further includes a first valve unit adapted to control open/close of the first and second heat medium circulation conduits 60 and 63 such that the heat medium is circulated through the first cooling heat exchanger circulation conduit 43 during the cooling operation of the compression type air conditioner 10, and the heat medium emerging from the regenerator 11 during the heating operation of the compression type air conditioner 10 is circulated through the suction-side overheating heat exchanger 62 via the second heat medium circulation conduit 63.

The first valve unit includes a first 3-way valve 71 arranged at a portion of the first heat medium circulation conduit 60, to which one end of the second heat medium circulation conduit 63 is connected, and a second 3-way valve 72 arranged at a portion of the first heat medium circulation conduit 60, to which the other end of the second heat medium circulation conduit 63 is connected, in order to allow the heat medium emerging from the regenerator 11 to be circulated through the second heat medium circulation conduit 63.

A third heat medium circulation conduit 64 is connected to the first heat medium circulation conduit 60, in order to guide the heat medium heated by the exhaust gas heat exchanger 21 to bypass the regenerator 11 when the absorption type air conditioner 20 is in an OFF state.

The cogeneration system further includes a second valve unit adapted to control open/close of the first and third heat medium circulation conduits 60 and 64 such that the heat medium passes through the third heat medium circulation conduit 64 when the absorption type air conditioner 20 is in an OFF state, and passes through the first heat medium circulation conduit 60 when the absorption type air conditioner 20 is in an ON state.

The second valve unit includes a third 3-way valve 73 arranged at a portion of the first heat medium circulation conduit 60, to which one end of the third heat medium circulation conduit 64 is connected, and a fourth 3-way valve 74 arranged at a portion of the first heat medium circulation conduit 60, to which the other end of the third heat medium circulation conduit 64 is connected, in order to guide the heat medium, which emerges from the exhaust gas heat exchanger 21 to pass through the third heat medium circulation conduit 64.

The cogeneration system further includes a cooling heat exchanger 65 adapted to cool the heat medium during the cooling operation of the compression type air conditioner 10, and a cooling heat exchanger circulation conduit 66 connected to the second heat medium circulation conduit 63 to guide the heat medium to be circulated through the cooling heat exchanger 65.

The cogeneration system further includes a third valve unit adapted to open/close of the second heat medium circulation conduit 63 and cooling heat exchanger circulation conduit 66 such that the heat medium is circulated through the cooling heat exchanger circulation conduit 66 during the cooling operation of the compression type air conditioner 10, and is circulated through the second heat medium circulation conduit 63 during the heating operation of the compression type air conditioner 10.

The third valve unit includes a fifth 3-way valve 75 arranged at a portion of the second heat medium circulation conduit 63, to which one end of the cooling heat exchanger circulation conduit 66 is connected, and a sixth 3-way valve 76 arranged at a portion of the second heat medium circulation conduit 63, to which the other end of the cooling heat exchanger circulation conduit 66 is connected, in order to guide the heat medium into the cooling heat exchanger circulation conduit 66.

The cogeneration system further includes a refrigerant circulation conduit 67 adapted to guide the refrigerant to be sucked into the compressor 3 of the compression type air conditioner 10, a bypass conduit 68 adapted to bypass the refrigerant, sucked toward the compressor 3, through the suction-side overheating heat exchanger 62, and a fourth valve unit adapted to allow the refrigerant sucked toward the compressor 3 to pass through a selected one of the refrigerant circulation conduit 67 and bypass conduit 68.

The fourth valve unit includes a seventh 3-way valve 77 arranged at a portion of the refrigerant circulation conduit 67, to which an inlet of the bypass conduit 68 is connected, in order to guide the refrigerant into the bypass conduit 68, and an eighth 3-way valve 78 arranged at a portion of the refrigerant circulation conduit 67, to which an outlet of the bypass conduit 68 is connected, in order to guide the refrigerant emerging from the suction-side overheating heat exchanger 62 to be circulated through the refrigerant circulation conduit 67.

The cogeneration system further includes a controller (not shown) for not only controlling the compression type air conditioner 10 and absorption type air conditioner 20, but also performing control operations to cause the heat medium circulation pump 61 to be in an ON state during the heating operation of the compression type air conditioner 10, to cause the third and fourth 3-way valves 73 and 74 to operate in heating mode during the heating operation of the compression type air conditioner 10, and to control the first and second 3-way valves 71 and 72 in accordance with the ON or OFF state of the absorption type air conditioner 20.

Hereinafter, operation of the cogeneration system according to the third embodiment of the present invention will be described.

First, when both the compression type air conditioner 10 and the absorption type air conditioner 20 operate in heating mode, as shown in FIG. 7, electricity generated from the generator 2 is supplied to the regenerator 11 and compressor 3. The first and second 4-way valves 4 and 13 operate in heating mode, and the first, second, third, fourth, fifth, sixth, seventh, and eighth 3-way valves 71, 72, 73, 74, 75, 76, 77, and 78 operate in heating mode. The heat medium circulation pump 61 is driven.

The first and second 3-way valves 71 and 72 open the second heat medium circulation conduit 63 to cause the heat medium emerging from the regenerator 11 to be circulated through the second heat medium circulation conduit 63. The fifth and sixth 3-way valves 75 and 76 close the cooling heat exchanger circulation conduit 66. The seventh and eighth 3-way valves 77 and 78 open the bypass conduit 68, thereby causing the refrigerant supplied toward the compressor 3 to be introduced into the suction-side overheating heat exchanger 62 via the bypass conduit 68.

The heat medium pumped by the heat medium circulation pump 61 is heated while passing through the cooling water heat exchanger 22, and is then introduced into the exhaust gas heat exchanger 21. After being re-heated in the exhaust gas heat exchanger 21, the heat medium is introduced into the regenerator 11. After transferring heat to the regenerator 11, the heat medium passes through the suction-side overheating heat exchanger 62 to heat-exchange with the suction-side overheating heat exchanger 62. Thereafter, the heat medium is returned to the cooling water heat exchanger 22.

The refrigerant introduced into the suction-side overheating heat exchanger 62 is heated by the heat medium passing through the suction-side overheating heat exchanger 62. The heated refrigerant passes through the first 4-way valve 4 and first indoor heat exchanger 5 after being compressed by the compressor 3. Since the refrigerant is re-heated in the suction-side overheating heat exchanger 62, heat of a higher temperature is released from the refrigerant. Accordingly, the heating performance of the compression type air conditioner 10 is enhanced.

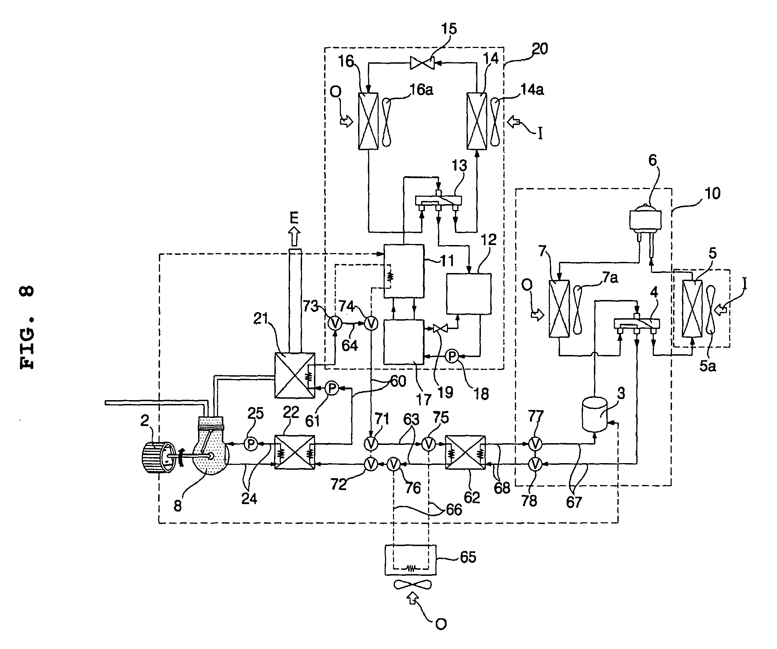

On the other hand, when the compression type air conditioner 10 operates in heating mode in the OFF state of the absorption type air conditioner 20, as shown in FIG. 8, the electricity generated from the generator 2 is supplied only to the compression type air conditioner 10. In this case, the first, second, fifth, sixth, seventh, and eighth 3-way valves 71, 72, 75, 76, 77, and 78 are controlled to be in heating mode. On the other hand, the third and fourth 3-way valves 73 and 74 are controlled to be in OFF mode.

That is, the first and second 3-way valves 71 and 72 open the second heat medium circulation conduit 63 to guide the heat medium into the second heat medium circulation conduit 63. The third and fourth 3-way valves 73 and 74 open the third heat medium circulation conduit 64 to prevent the heat medium from being introduced into the regenerator 11. The fifth and sixth 3-way valves 75 and 76 close the cooling heat exchanger circulation conduit 66. The seventh and eighth 3-way valves 77 and 78 open the bypass conduit 68.

Accordingly, the heat medium heated in the cooling water heat exchanger 22 is introduced into the exhaust gas heat exchanger 21, and is re-heated while passing through the exhaust gas heat exchanger 21. Thereafter, the heat medium passes through the third 3-way valve 73, third heat medium circulation conduit 64, and fourth 3-way valve 74, in this order, enters the suction-side overheating heat exchanger 62 via the first 3-way valve 71 and second heat medium circulation conduit 63, and then returns to the cooling water heat exchanger 22.

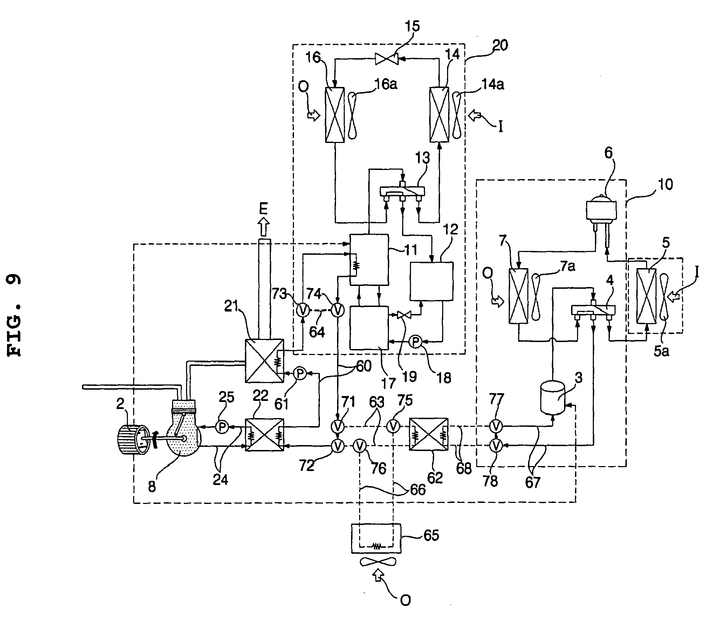

On the other hand, when the absorption type air conditioner 20 operates in heating mode, and the compression type air conditioner 10 is in an OFF state, as shown in FIG. 9, the electricity generated from the generator 2 is supplied only to the absorption type air conditioner 20.

In this case, the first and second 3-way valves 71 and 72 close the second heat medium circulation conduit 63, and the seventh and eighth 3-way valves 77 and 78 close the bypass conduit 68.

Accordingly, the heat medium heated in the cooling water heat exchanger 22 passes through the exhaust gas heat exchanger 21, regenerator 11, first 3-way valve 71, and second 3-way valve 72, in this order, and then returns to the cooling water heat exchanger 22.

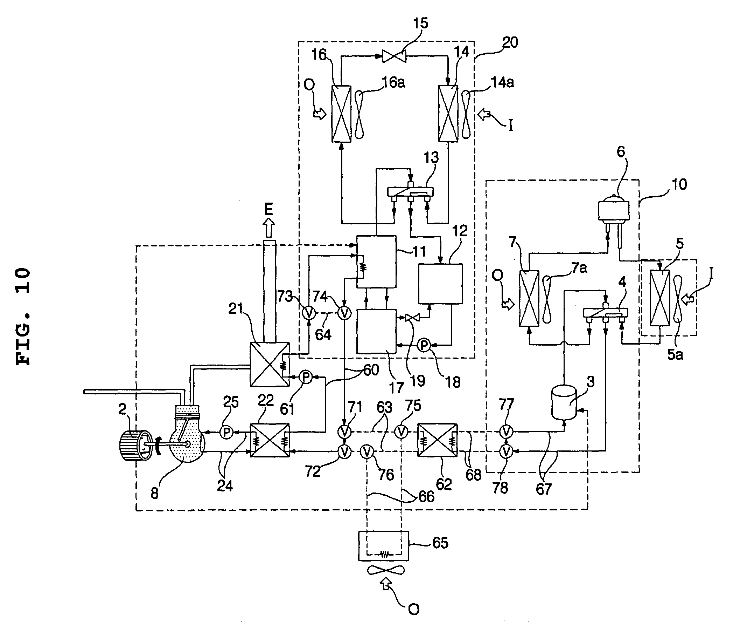

On the other hand, when both the compression type air conditioner 10 and the absorption type air conditioner 20 operate in cooling mode, as shown in FIG. 10, the electricity generated from the generator 2 is supplied to both the compression type air conditioner 10 and the absorption type air conditioner 20.

In this case, since the absorption type air conditioner 20 requires a heat source supplied from the regenerator 11 irrespective of the operation mode (cooling or heating mode) of the absorption type air conditioner 20, the heat medium, which sequentially passes through the cooling water heat exchanger 22 and exhaust gas heat exchanger 21, is supplied to the regenerator 11 without being introduced into the suction-side overheating heat exchanger 44.

That is, the first and second 3-way valves 71 and 72 close the second heat medium circulation conduit 63, whereas the seventh and eighth 3-way valves 77 and 78 close the bypass conduit 68.

Accordingly, the heat medium heated in the cooling water heat exchanger 22 is introduced into the exhaust gas heat exchanger 21, so that the heat medium is re-heated in the exhaust gas heat exchanger 21. The heated heat medium is supplied to the regenerator 11, and is then returned to the cooling water heat exchanger 22 via the first and second 3-way valves 71 and 72.

The regenerator 11 produces refrigerant vapor, using heat transferred from the heat medium. The produced refrigerant vapor passes through the second 4-way valve 13, second outdoor heat exchanger 16, second expansion device 15, and second indoor heat exchanger 14, in this order, thereby cooling indoor air.

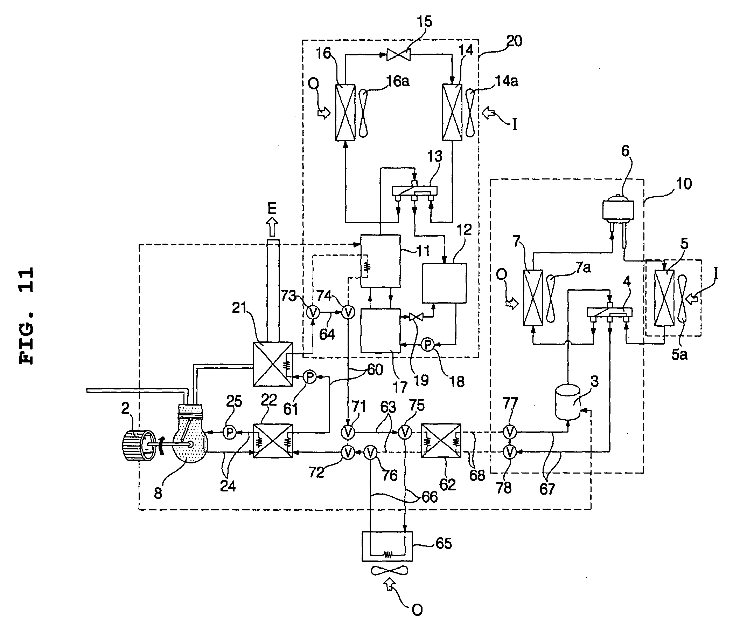

On the other hand, when the compression type air conditioner 10 operates in cooling mode, and the absorption type air conditioner 20 is in an OFF state, as shown in FIG. 11, the electricity generated from the generator 2 is supplied only to the compression type air conditioner 10.

In this case, the heat medium heated by the cooling water heat exchanger 22 and exhaust gas heat exchanger 21 releases heat to the cooling heat exchanger 65.

That is, the third and fourth 3-way valves 73 and 74 open the third heat medium circulation conduit 64, the first and second 3-way valves 71 and 72 open the second heat medium circulation conduit 63, and the fifth and sixth 3-way valves 75 and 76 open the cooling heat exchanger circulation conduit 66.

Accordingly, the heat medium, which sequentially passes through the cooling water heat exchanger 22 and exhaust gas heat exchanger 21, is introduced into the third heat medium circulation conduit 64 via the third 3-way valve 73, is introduced into the second heat medium circulation conduit 63 via the first 3-way valve 71, and is then introduced into the cooling heat exchanger circulation conduit 66 via the fifth 3-way valve 75.

The heat medium introduced into the cooling heat exchanger circulation conduit 66 is returned to the cooling water heat exchanger 22 via the sixth 3-way valve 76 after releasing heat to the cooling heat exchanger 65.

The cogeneration system according to any one of the above-described embodiments of the present invention has various effects.

That is, the cogeneration system according to the present invention is configured such that waste heat generated from the drive source such as an engine is used in at least one of the compression type air conditioner and absorption type air conditioner. Accordingly, an increase in cooling/heating capacity is achieved. Since the absorption type air conditioner can use the waste heat during a cooling operation thereof, an enhancement in the efficiency of using waste heat.

In the cogeneration system according to the present invention, electricity generated from the generator may be used in the compression type air conditioner, and the waste heat generated from the drive source may be used in the absorption type air conditioner. In this case, there are advantages of an enhancement in cooling/heating performance and an enhancement in the efficiency of using waste heat.

Since the temperature of the waste heat recovered by the exhaust gas heat exchanger is higher than the temperature of the waste heat recovered by the cooling water heat exchanger, the cogeneration system according to the present invention may be configured such that the waste heat recovered by the exhaust gas heat exchanger is used in the regenerator of the absorption type air conditioner, which requires a heat source of a higher temperature, and the waste heat recovered by the cooling water heat exchanger is used in the suction-side overheating heat exchanger. In this case, it is possible to implement an optimal system with an enhancement in the efficiency of using waste heat.

Also, the cogeneration system according to the present invention may be configured such that the heat medium heated in the cooling water heat exchanger is supplied to the regenerator of the absorption type air conditioner after being re-heated in the exhaust gas heat exchanger, and is subsequently used in the suction-side overheating heat exchanger after heat-exchanging with the regenerator. In this case, heat of a relatively high temperature is supplied to the regenerator because the heat medium is supplied to the regenerator after sequentially passing through the cooling water heat exchanger and exhaust gas heat exchanger. The heat medium, which has heat-exchanged with the regenerator, is used in the suction-side overheating heat exchanger. Accordingly, there is an advantage in that it is possible to implement an optimal system with an enhancement in the efficiency of using waste heat.

Although embodiments of the invention have been disclosed for illustrative purposes, those skilled in the art will appreciate that various modifications, additions and substitutions are possible, without departing from the scope of the invention as disclosed in the accompanying claims.

## Claims

1. A cogeneration system comprising:
a generator (2);
a drive source operating to drive the generator (2), thereby causing the generator (2) to generate electricity, the drive source generating waste heat during the operation of the drive source;
a compression type air conditioner (10) comprising a compressor (3), a 4-way valve (4), an indoor heat exchanger (5), an expansion device (6), and an outdoor heat exchanger (5);
an absorption type air conditioner (20) comprising a regenerator (11), an absorber (12), a 4-way valve (13), an indoor heat exchanger (14), an expansion device (15), and an outdoor heat exchanger (16); and
a waste heat recoverer adapted to recover the waste heat of the drive source, and to supply the recovered waste heat to at least one of the compression type air conditioner (10) and the absorption type air conditioner (20).

2. The cogeneration system according to claim 1, wherein the waste heat recoverer comprises:
an exhaust gas heat exchanger (21) adapted to absorb heat from exhaust gas discharged from the drive source;
a cooling water heat exchanger (22) adapted to absorb heat from cooling water used to cool the drive source; and
a heat transfer unit to transfer heat from at least one of the exhaust gas heat exchanger (21) and cooling water heat exchanger (22) to the compression type air conditioner (10) or to the absorption type air conditioner (20).

3. The cogeneration system according to claim 2, wherein the heat transfer unit (70) comprises:
a heat medium circulation conduit (26) adapted to guide a heat medium, which has been heated by at least one of the exhaust gas heat exchanger (21) and the cooling water heat exchanger (22), into the regenerator (11), thereby causing the heat medium to transfer heat to the regenerator (11); and
a heat medium circulation pump (27) adapted to pump the heat medium for circulation of the heat medium.

4. The cogeneration system according to claim 3, further comprising:
a cooling heat exchanger (28) adapted to cool the heat medium, which has been heated by at least one of the exhaust gas heat exchanger (21) and the cooling water heat exchanger (22), when the absorption type air conditioner (20) is in an OFF state; and
a cooling heat exchanger circulation conduit (26) connected to the heat medium circulation conduit (26) to guide the heat medium to be circulated through the cooling heat exchanger (28).

5. The cogeneration system according to claim 4, further comprising:
a valve unit adapted to control the heat medium circulation conduit (26) and the cooling heat exchanger circulation conduit (29) such that the heat medium is circulated through the cooling heat exchanger circulation conduit (29) when the absorption type air conditioner is in the OFF state, and is circulated through the heat medium circulation conduit (26) when the absorption type air conditioner (20) is in an ON state.

6. The cogeneration system according to claim 5, wherein the heat medium circulation conduit (26) guides the heat medium, which has been heated by the cooling water heat exchanger (22), such that the heat medium is re-heated in the exhaust gas heat exchanger (21), and is then returned to the cooling water heat exchanger (22) after transferring heat to the regenerator (11).

7. A cogeneration system comprising:
a generator (2);
a drive source operating to drive the generator (2), thereby causing the generator (2) to generate electricity, the drive source generating waste heat during the operation of the drive source;
a compression type air conditioner (10) comprising a compressor (3), a 4-way valve (4), an indoor heat exchanger (5), an expansion device (6), and an outdoor heat exchanger (5);
an absorption type air conditioner (20) comprising a regenerator (11), an absorber (12), a 4-way valve (13), an indoor heat exchanger (14), an expansion device (15), and an outdoor heat exchanger (16);
a waste heat recoverer adapted to recover the waste heat of the drive source, and to supply the recovered waste heat to at least one of the compression type air conditioner (10) and the absorption type air conditioner (20); and
a suction-side overheating heat exchanger (44 or 62) adapted to supply the waste heat recovered by the waste heat recoverer to the compression type air conditioner (10).

8. The cogeneration system according to claim 7, wherein the waste heat recoverer comprises:
an exhaust gas heat exchanger (21) adapted to absorb heat from exhaust gas discharged from the drive source;
a cooling water heat exchanger (22) adapted to absorb heat from cooling water used to cool the drive source; and
a heat transfer unit to transfer heat from at least one of the exhaust gas heat exchanger (21) and cooling water heat exchanger (22) to the compression type air conditioner (10) or to the absorption type air conditioner (20).

9. The cogeneration system according to claim 2, wherein the heat transfer unit (70) comprises:
a first heat medium circulation conduit (40) adapted to guide a heat medium, which has been heated by one of the exhaust gas heat exchanger (21) and the cooling water heat exchanger (22), into the regenerator (11), thereby causing the heat medium to transfer heat to the regenerator (11); and
a second heat medium circulation conduit (45) adapted to guide a heat medium, which has been heated by the other one of the exhaust gas heat exchanger (21) and the cooling water heat exchanger (22), into the suction-side overheating heat exchanger (44), thereby causing the heat medium to transfer heat to the suction-side overheating heat exchanger (44).

10. The cogeneration system according to claim 9, wherein:
the first heat medium circulation conduit (40) guides the heat medium, which has been heated by the exhaust gas heat exchanger (21), such that the heat medium is returned to the exhaust gas heat exchanger (21) after transferring heat to the regenerator (11); and
the second heat medium circulation conduit (45) guides the heat medium, which has been heated by the cooling water heat exchanger (22), such that the heat medium is returned to the cooling water heat exchanger (22) after transferring heat to the suction-side overheating heat exchanger (44).

11. The cogeneration system according to claim 9, further comprising:
a cooling heat exchanger (42) adapted to cool the heat medium, which has been heated by at least one of the exhaust gas heat exchanger (21) and the cooling water heat exchanger (22), when the absorption type air conditioner (20) is in an OFF state or when the compression type air conditioner (10) operates in a cooling mode;
a first cooling heat exchanger circulation conduit (43) connected between the cooling heat exchanger (42) and the first heat medium circulation conduit (40); and
a second cooling heat exchanger circulation conduit (47) connected between the cooling heat exchanger (42) and the second heat medium circulation conduit (45).

12. The cogeneration system according to claim 11, further comprising:
a first valve unit adapted to guide the heat medium such that the heat medium is circulated through the second cooling heat exchanger circulation conduit (47) during a cooling operation of the compression type air conditioner (10), and is circulated through the second heat medium circulation conduit (45) during a heating operation of the compression type air conditioner (10).

13. The cogeneration system according to claim 12, further comprising:
a refrigerant circulation conduit (48) adapted to guide a refrigerant to be sucked into the compressor (3);
a bypass conduit (49) adapted to bypass the refrigerant, which is sucked toward the compressor (3), through the suction-side overheating heat exchanger (44) during the heating operation of the compression type air conditioner (10); and
a second valve unit adapted to guide the refrigerant, which is sucked toward the compressor (3), to pass through a selected one of the refrigerant circulation conduit (48) and the bypass conduit (49).

14. The cogeneration system according to claim 8, wherein the heat transfer unit comprises:
a first heat medium circulation conduit (60) adapted to guide the heat medium, which has been heated by the cooling water heat exchanger (22), such that the heat medium is re-heated by the exhaust gas heat exchanger (21), and is then returned to the cooling water heat exchanger (22) after transferring heat to the regenerator (11); and
a second heat medium circulation conduit (63) connected to the first heat medium circulation conduit (60) to guide the heat medium, which emerges from the regenerator (11), to be bypassed through the suction-side overheating heat exchanger (62) during a heating operation of the compression type air conditioner (10).

15. The cogeneration system according to claim 14, further comprising:
a first valve unit adapted to control the first heat medium circulation conduit (60) and the second heat medium circulation conduit (63) such that the heat medium is circulated through the first heat medium circulation conduit (60) when the absorption type air conditioner (20) is in an ON state, and the compression type air conditioner 10 operates in a cooling mode, and the heat medium, which emerges from the regenerator (11), is circulated through the suction-side overheating heat exchanger (62) via the second heat medium circulation conduit (60) during the heating operation of the compression type air conditioner (10).

16. The cogeneration system according to claim 15, further comprising:
a third heat medium circulation conduit (64) connected to the first heat medium circulation conduit (60) to guide the heat medium such that the heat medium bypasses the regenerator (11) when the absorption type air conditioner (20) is in an OFF state.

17. The cogeneration system according to claim 16, further comprising:
a second valve unit adapted to control the first heat medium circulation conduit (60) and the third heat medium circulation conduit (64) such that the heat medium passes through the third heat medium circulation conduit (64) when the absorption type air conditioner (20) is in the OFF state, and passes through the first heat medium circulation conduit (60) when the absorption type air conditioner (20) is in the ON state.

18. The cogeneration system according to claim 17, further comprising:
a cooling heat exchanger (65) adapted to cool the heat medium during the cooling operation of the compression type air conditioner (10); and
a cooling heat exchanger circulation conduit (66) connected to the second heat medium circulation conduit (63) to guide the heat medium to be circulated through the cooling heat exchanger (65).

19. The cogeneration system according to claim 18, further comprising:
a third valve unit adapted to control the second heat medium circulation conduit (63) and the cooling heat exchanger circulation conduit (66) such that the heat medium is circulated through the cooling heat exchanger circulation conduit (66) during the cooling operation of the compression type air conditioner (10) in the OFF state of the absorption type air conditioner (20), and is circulated through the second heat medium circulation conduit (63) during the heating operation of the compression type air conditioner (10).

20. The cogeneration system according to claim 19, further comprising:
a refrigerant circulation conduit (67) adapted to guide a refrigerant to be sucked into the compressor (3);
a bypass conduit (68) adapted to bypass the refrigerant, which is sucked toward the compressor (3), through the suction-side overheating heat exchanger (62) during the heating operation of the compression type air conditioner (10); and
a fourth valve unit adapted to guide the refrigerant, which is sucked toward the compressor (3), to pass through a selected one of the refrigerant circulation conduit (67) and the bypass conduit (68).
